# EUROPÄISCHE PATENTSCHRIFT

(11) **EP 0 961 019 B1**
(45) Veröffentlichungstag und Bekanntmachung des Hinweises auf die Patenterteilung: **14.03.2007**
(21) Anmeldenummer: 99109936.7
(22) Anmeldetag: 20.05.1999
(51) Int. Cl.: F02D 41/06, F02D 41/22, F02D 41/36

(54) **Verfahren zum Betreiben einer direkteinspritzenden Brennkraftmaschine während des Starts**
Method for the operation of a direct-injected internal-combustion engine during the start
Procédé pour le fonctionnement d'un moteur à combustion interne à injection directe au démarrage

(30) Priorität: 25.05.1998 DE 19823280
(43) Veröffentlichungstag der Anmeldung: 01.12.1999
(73) Patentinhaber: SIEMENS AKTIENGESELLSCHAFT, 80333 München (DE); DaimlerChrysler AG, 70567 Stuttgart (DE)
(72) Erfinder: Eisath, Christoph, 94353 Haibach (DE); Holtschmit, Wolf-Eike, 66333 Völklingen (DE); Weber, Stefan-Max, 93059 Regensburg (DE); Bauer, Bernd, 73732 Esslingen (DE); Heidenfelder, Hans Dieter, 71334 Waiblingen (DE); Lux, Christoph, 70193 Suttgart (DE)
(74) Vertreter: Berg, Peter

(56) Entgegenhaltungen:
- DE-A- 4 020 298
- DE-A- 19 622 757
- DE-A- 19 729 811
- DE-A- 19 739 786
- PATENT ABSTRACTS OF JAPAN vol. 017, no. 151 (M-1387), 25. März 1993 (1993-03-25) & JP 04 321747 A (YAMAHA MOTOR CO LTD), 11. November 1992 (1992-11-11)
- FRAIDL G ET AL: "OTTO - DIREKTEINSPRITZUNG EIN GANZHEITLICHER SYSTEMANSATZ GASOLINE DIRECT INJECTION AN INTEGRATED SYSTEMS APPROACH" , AVL TAGUNG MOTOR UND UMWELT - CONFERENCE ENGINE AND ENVIRONMENT, XX, XX, PAGE(S) 255,257-271 XP000992233 * das ganze Dokument *

## Beschreibung

Die Erfindung betrifft ein Verfahren zum Betreiben einer direkteinspritzenden Brennkraftmaschine während des Starts gemäß dem Oberbegriff des Patentanspruches 1.

Brennkraftmaschinen mit Direkteinspritzung beinhalten ein großes Potential zur Reduktion des Kraftstoffverbrauches bei relativ geringem Schadstoffausstoß. Im Gegensatz zur Saugrohreinspritzung wird bei einer Direkteinspritzung Kraftstoff mit hohem Druck direkt in den Verbrennungsraum eingespritzt.

Die Direkteinspritzung ermöglicht durch die freie Wahl des Einspritzzeitpunktes verschiedene Betriebsweisen der Brennkraftmaschine. Bei sehr früher Einspritzung während des Ansaughubes ergibt sich eine weitgehende Ladungshomogenisierung und damit ein homogener Betrieb, der für maximale Luftausnutzung unter Vollast, teilweise auch im Kaltstart und Warmlauf, sowie insbesondere für den homogenen Teillastbetrieb eingesetzt wird. Bei spätem Einspritzzeitpunkt während des Verdichtungshubes erhält man eine mehr oder weniger stark ausgeprägte Ladungsschichtung und damit einen geschichteten Betrieb, der weitgehend im extrem mageren Teillastbetrieb angewendet wird. Auch sind die Zündzeitpunkte unterschiedlich wählbar (s. hierzu AVL Tagung "Motor und Umwelt" 1997, "Otto-Direkteinspritzung - ein ganzheitlicher Systemansatz", S.255-271).

Bei direkteinspritzenden Brennkraftmaschinen ist es ferner bekannt, den Startvorgang im homogenen Betriebsmodus durchzuführen. Dabei werden die Einspritzmenge für den Kraftstoff und der Einspritzbeginnwinkel vorgegeben und die Einspritzung beginnt sofort nachdem die Synchronisation abgeschlossen ist.

Da unmittelbar nach dem Beginn des Startvorganges aufgrund des mechanischen Antriebes der Kraftstoffhochdruckpumpe der Druck im Hochdruckspeicher (Raildruck) im wesentlichen von der elektrisch angetriebenen Förderpumpe bestimmt ist und damit relativ geringe Werte aufweist, wird der eingespritzte Kraftstoff schlecht aufbereitet (große Kraftstofftröpfchen). Abhängig vom Raildruck ändert sich die Einspritzdauer und damit auch das Einspritzende. Das hat u.U. zur Folge, daß an der Zündkerze kein zündfähiges Gemisch vorliegt und die Zeitspanne, bis der Startvorgang beendet ist, sehr groß ist. Ein solcher Startvorgang wird auch als Niederdruckstart bezeichnet.

Aus der DE 197 29 811 A1 ist ein Verbrennungssteuerungssystem und -verfahren mit Kraftstoffeinspritzung im Zylinder bekannt, mit denen es möglich ist, selektiv eine Verbrennungsstrategie zu wählen von einer Schichtladungs-Verbrennung zu einer Homogenladungs-Verbrennung und umgekehrt, wobei eine Kühlmitteltemperatur beim Start des Motors niedriger ist als eine vorgegebene Temperatur. Die Verbrennungsstrategie wird so realisiert, dass eine Homogenladungs- Verbrennungsbetriebsart vorgegeben und diese Homogenladungs-Verbrennungsbetriebsart beibehalten wird, bis die Kühlmitteltemperatur einen vorgegebenen Wert erreicht hat. Wenn die Kühlmitteltemperatur höher ist als der vorgegebene Temperaturwert und niedriger als eine Aufwärmbeendigungs-Temperatur, wird die Verbrennungsstrategie von der Homogenladungs-Verbrennung zu Schichtladungs-Verbrennung umgeschaltet durch Absenken der Motorlast von einem Bereich hoher Last zu einem Bereich niedriger Last, um die Emission und Wirtschaftlichkeit des Kraftstoffverbrauchs zu verbessern.

Der Erfindung liegt die Aufgabe zugrunde, ein Verfahren zum Betreiben einer direkteinspritzenden Brennkraftmaschine während des Starts anzugeben, mit dem der Startvorgang verkürzt werden kann.

Diese Aufgabe wird durch die Merkmale des Patentanspruches 1 gelöst. Vorteilhafte Weiterbildungen der Erfindung sind in den Unteransprüchen angegeben.

In Abhängigkeit einer die Temperatur der Brennkraftmaschine charakterisierenden Größe, insbesondere der Kühlmitteltemperatur wird zwischen dem sogenannten Niederdruckstart mit homogenem Gemisch und dem sogenannten Hochdruckstart mit geschichtetem Gemisch umgeschaltet. Dadurch, daß beim Hochdruckstart der Brennkraftmaschine der Betrieb mit geschichteten Gemisch nur freigegeben wird, wenn der Kraftstoffdruck (P_{Rail}) einen vorgegebenen Schwellenwert (P_{_SCHw}) innerhalb einer bestimmten Anzahl von Zyklen der Brennkraftmaschine erreicht hat, und andernfalls der Betrieb mit homogenen Gemisch ausgewählt wird, wird der eingespritzte Kraftstoff besser aufbereitet (kleinere Kraftstofftröpfchen). Die Einspritzung wird bei einem solchen Hochdruckstart durch die Einspritzmenge und dem Einspritzendewinkel vorgegeben. Durch Vorgabe des Einspritzendewinkels im Gegensatz zur Vorgabe des Einspritzbeginnwinkels bei einem herkömmlichen Niederdruckstart wird sichergestellt, daß sich an der Zündkerze ein zündfähiges Gemisch befindet und zwar unabhängig von der Spritzdauer.

Vorteilhafterweise erfolgt beim Hochdruckstart eine Begrenzung der Einspritzzeit auf einen frühest möglichen Einspritzbeginn, damit nicht in den Ausschubtakt eingespritzt wird. Beim Niederdruckstart dagegen erfolgt eine Begrenzung der Einspritzzeit hinsichtlich des Einspritzendes, damit nicht in das gezündete Kraftstoff-Luftgemisch gespritzt wird, was zu starker Rußentwicklung führen würde.

Ein Ausführungsbeispiel der Erfindung wird anhand der Figuren näher erläutert. Es zeigen:
- Figur 1:: ein Blockschaltbild einer direkteinspritzenden Brennkraftmaschine mit Hochdruckspeicher und zugehöriger Steuerungseinrichtung;
- Figur 2:: ein Flußdiagramm zur Erläuterung des erfindungsgemäßen Verfahrens.

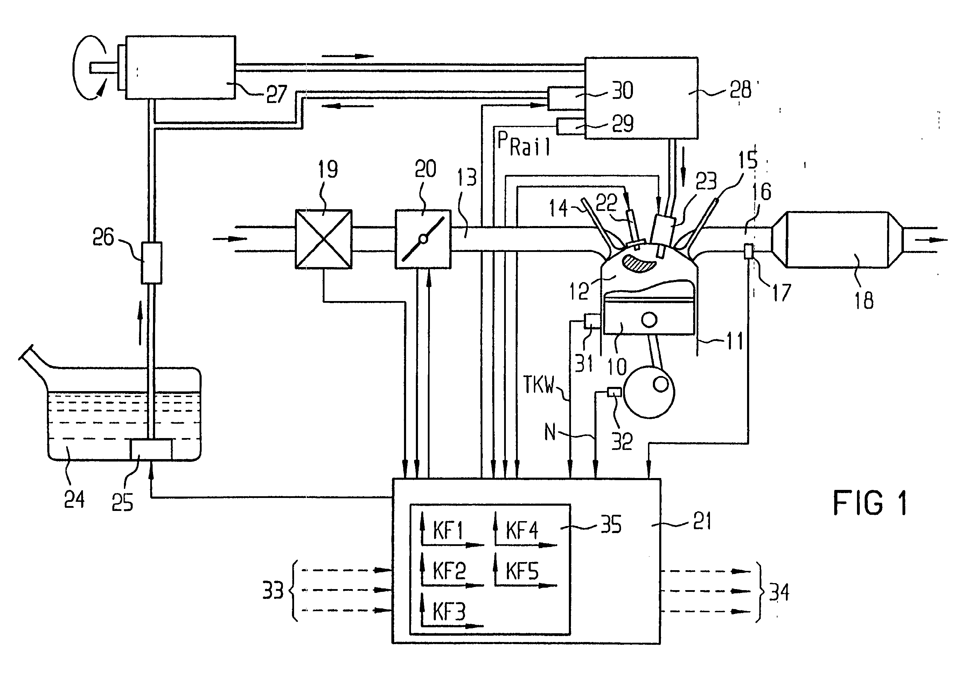

Die Figur 1 zeigt in grob schematischer Darstellung eine Brennkraftmaschine mit einer Hochdruck-Speichereinrichtung (Common Rail). Aus Gründen der Übersichtlichkeit sind dabei nur diejenigen Teile gezeichnet, die für das Verständnis der Erfindung notwendig sind. Insbesondere ist nur ein Zylinder einer mehrzylindrigen Brennkraftmaschine dargestellt.

Mit dem Bezugszeichen 10 ist ein Kolben bezeichnet, der in einem Zylinder 11 einen Verbrennungsraum 12 begrenzt. In den Verbrennungsraum 12 mündet ein Ansaugkanal 13, durch den gesteuert durch ein Einlaßventil 14 die Verbrennungsluft in den Verbrennungsraum 12 strömt. Gesteuert durch ein Außlaßventil 15 zweigt vom Verbrennungsraum 12 ein Abgaskanal 16 ab, in dessen weiterer Verlauf ein Sauerstoffsensor (Lambdasonde) 17 und ein NOₓ-Speicherkatalysator 18 angeordnet ist. Der NOₓ-Speicherkatalysator 18 dient dazu, in Betriebsbereichen der Brennkraftmaschine mit magerer Verbrennung die geforderten Abgasgrenzwerte einhalten zu können. Er adsorbiert aufgrund seiner Beschichtung die bei magerer Verbrennung erzeugten NOₓ-Verbindungen im-Abgas.

Die zur Verbrennung im Zylinder 11 notwendige Frischluft strömt über ein nicht dargestelltes Luftfilter und einen Luftmassenmesser 19 in den Ansaugkanal 13 zu einer Drosselklappe 20. Als Drosselklappe 20 findet bevorzugter Weise ein elektromotorisch angetriebenes Drosselorgan Verwendung, dessen Öffnungsquerschnitt neben der Betätigung durch den Fahrer (Fahrerwunsch) auch abhängig von Betriebsparametern der Brennkraftmaschine über Signale einer Steuerungseinrichtung 21 einstellbar ist (E-Gasanlage). Damit lassen sich beispielsweise störende Lastwechselreaktionen des Fahrzeugs beim abrupten Gasgeben oder Gaswegnehmen ebenso reduzieren wie Drehmomentsprünge beim Übergang vom Betrieb mit homogenem Gemisch zum Betrieb mit geschichteter Ladung und ungedrosseltem Luftweg. Zugleich wird zur Überwachung und Überprüfung ein Signal für die Stellung der Drosselklappe an die Steuerungseinrichtung 21 abgegeben.

In den Verbrennungsraum 12 ragt eine Zündkerze 22 und ein Einspritzventil 23, durch das Kraftstoff bei Bedarf in den Verbrennungsraum 12 eingespritzt werden kann. Die Förderung und Bereitstellung des Kraftstoffes für dieses Einspritzventil 23 erfolgt durch ein bekanntes Common-Rail-System für Benzin-Direkteinspritzung. Der Kraftstoff wird dabei aus einem Kraftstoffvorratsbehälter 24 mittels einer, in der Regel innerhalb des Behälters angeordneten, einen Vorfilter aufweisenden Elektrokraftstoffpumpe 25 unter geringem Druck (typisch 3 bar) gefördert und anschließend über einen Kraftstoffilter 26 zu einer Kraftstoffhochdruckpumpe 27 geleitet. Diese Kraftstoffhochdruckpumpe 27 wird in bevorzugter Weise mechanisch durch eine Kopplung mit der Kurbelwelle oder der Nockenwelle der Brennkraftmaschine angetrieben. Sie erhöht den Kraftstoffdruck auf einen maximalen Wert von typisch 100 bar in einem Hochdruckspeicher 28 (Common-Rail), an dem die Zuführleitungen aller Einspritzventile angeschlossen sind. Der Druck im Hochdruckspeicher 28 wird mittels eines Drucksensors erfaßt und ein entsprechendes Drucksignal p_{Rail} der Steuerungseinrichtung 21 übertragen. Mit Hilfe eines Druckreglers 30 wird der Druck im Hochdruckspeicher 28 auf einen konstanten Wert eingestellt. Überschüssiger Kraftstoff wird nicht in den Kraftstoffvorratsbehälter 24 zurückgeführt, sondern an den Eingang der Kraftstoffhochdruckpumpe 27.

Ein Temperatursensor 31 erfaßt ein der Temperatur der Brennkraftmaschine entsprechendes Signal, vorzugsweise über eine Messung der Kühlmitteltemperatur TKW. Die Drehzahl N der Brennkraftmaschine wird mit Hilfe eines Markierungen der Kurbelwelle oder eines mit ihr verbundenen Geberrades abtastenden Sensors erfaßt. Diese Signale werden ebenso wie das Signal des Luftmassenmessers 19 der Steuerungseinrichtung 21 zur Aufbereitung und weiteren Verarbeitung, insbesondere zur Berechnung der Einspritzmenge bzw. der Einspritzzeit, sowie des Einspritzbeginnwinkels und des Einspritzendewinkels zugeführt.

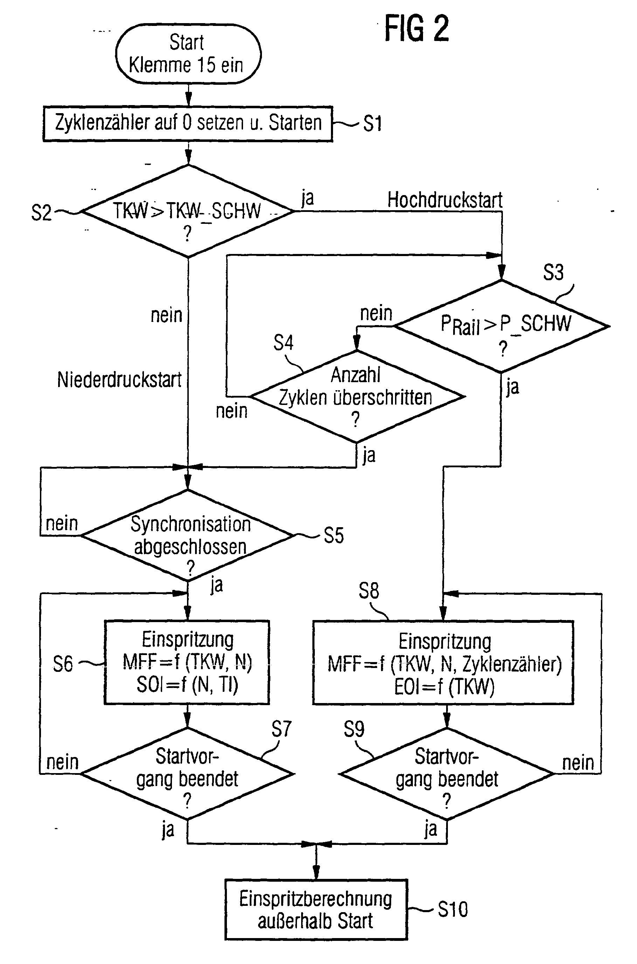

Weitere Steuerparameter, die zum gesteuerten/geregelten Betrieb der Brennkraftmaschine benötigt werden, wie beispielsweise Gaspedalstellung, Temperatur der Ansaugluft, Drosselklappenstellung, Signale von Klopfsensoren, Batteriespannung, Fahrdynamikanforderungen usw. sind ebenfalls der Steuerungseinrichtung 21 zugeführt und sind in der Figur allgemein mit dem Bezugszeichen 33 gekennzeichnet. Mit Hilfe der Steuerparameter wird in der Steuerungseinrichtung 21 durch Abarbeiten abgelegter Steuerroutinen die Brennkraftmaschine gesteuert bzw. geregelt. Hierzu werden über Signale verschiedene Stellgeräte angesteuert, die jeweils einen Stellantrieb und ein Stellglied umfassen, zB. die Drosselklappe und die Einspritzventile. Diese Signale sind in der Figur allgemein mit dem Bezugszeichen_34 gekennzeichnet. Desweiteren weist die Steuerungseinrichtung einen Speicher 35 auf, in dem u.a. mehrere Kennfelder KF1-KF5 abgelegt sind, deren Bedeutung anhand der nun folgenden Beschreibung der Figur 2 näher erläutert wird.

Nach dem Start der Brennkraftmaschine (Klemme 15 ein) wird in einem ersten Verfahrensschritt S1 der Inhalt eines Zyklenzählers auf den Wert Null zurückgesetzt und neu gestartet. Als Zyklus ist dabei bei einer 4-Zylinder-Brennkraftmaschine eine halbe Umdrehung der Kurbelwelle zu verstehen. Es ist aber auch möglich, daß der Zyklenzähler die Anzahl der Arbeitsspiele nach dem Start der Brennkraftmaschine aufsummiert.

Anschließend wird im Verfahrensschritt S2 die mittels des Temperatursensors 31 erfaßte Kühlmitteltemperatur TKW mit einem Schwellenwert TKW_SCHW verglichen. Der Schwellenwert TKW_SCHW wird durch Versuche ermittelt und ist in dem Speicher 35 der Steuerungseinrichtung 21 abgelegt. Liegt die Temperatur TKW des Kühlmittels unterhalb des Schwellenwertes oder ist sie gleich diesem Schwellenwert, so wird immer ein sogenannter Niederdruckstart durchgeführt und das Verfahren wird mit dem Verfahrensschritt S5 fortgesetzt. Dabei wird überprüft, ob die Synchronisation für den Einspritzvorgang schon beendet ist. Diese Abfrage wird solange innerhalb einer Schleife wiederholt, bis die Abfrage ein positives Ergebnis liefert. Ist dies der Fall, so wird im Verfahrensschritt S6 die Einspritzmenge MFF aus einem Kennfeld KF1 des Speichers 35 ausgelesen. In diesem Kennfeld KF1 sind in Abhängigkeit von der Kühlmitteltemperatur TKW und der Drehzahl N Werte für die Einspritzmenge MFF in mg/Hub abgelegt.

Außerdem wird aus einem Kennfeld KF2 des Speichers 35 der Einspritzbeginnwinkel SOI als Funktion der Drehzahl N und der Einspritzzeit TI ausgelesen, wobei die Einspritzzeit TI aus dem Wert für den Druck P_{Rail} im Hochdruckspeicher 28 gewonnen wird. Mit diesen Parametern wird die Einspritzung ausgeführt.

Anschließend wird im Verfahrensschritt S7 abgefragt, ob das Ende des Startvorganges schon erreicht ist. Der Startvorgang ist abgeschlossen, wenn die vom Drehzahlsensor erfaßte Drehzahl N einen vorgegebenen Grenzwert überschritten hat. Bei negativem Ergebnis der Abfrage wird der Verfahrensschritt S6 wiederholt ausgeführt, andernfalls erfolgt die Berechnung der Parameter für den Einspritzvorgang nach herkömmlicher Weise für den Betrieb der Brennkraftmaschine außerhalb des Startvorganges (Verfahrensschritt S10).

Ergibt die Abfrage in Verfahrensschritt S2, daß die Temperatur des Kühlmittels TKW den Schwellenwert TKW_SCHW überschritten hat, so wird im Verfahrensschritt S3 überprüft, ob der mittels des Drucksensors 29 erfaßte Druck P_{Rail} im Hochdruckspeicher 28 einen vorgegebenen Schwellenwert P_SCHW überschritten hat. Dieser Schwellenwert P_SCHW ist in Abhängigkeit der Kühlmitteltemperatur TKW in einem Kennfeld KF3 der Steuerungseinrichtung 21 abgelegt. Liegt der aktuelle Wert des Druckes unterhalb des Schwellenwertes P_SCHW, so wird im Verfahrensschritt S4 abgefragt, ob der Wert des Zyklenzählers einen vorgegebenen Schwellenwert überschritten hat. Ist dies der Fall, so wird zum Verfahrensschritt S5 verzweigt und es werden die Parameter für den sogenannten Niederdruckstart berechnet, wie es anhand der Verfahrensschritte S6, S7 und S10 bereits erläutert wurde. Innerhalb der vorgegebenen Anzahl von Zyklen konnte kein so hoher Druck im Hochdruckspeicher aufgebaut werden, daß ein Hochdruckstart durchgeführt werden kann. Der Hochdruckstart wird also abgebrochen und auf Niederdruckstart umgeschaltet. An Stelle der Abfrage des Inhalts eines Zyklenzählers kann alternativ hierzu auch eine reine Zeitabfrage erfolgen und auf Niederdruckstart umgeschaltet werden, wenn nach einer bestimmten Zeit die Raildruckschwelle nicht erreicht wird.

Ist die Anzahl der gezählten Zyklen kleiner als der vorgegebene Schwellenwert (Abfrage in Verfahrensschritt S4), so wird wieder zum Verfahrensschritt S3 verzweigt. Dies geschieht solange, bis der Druck P_{Rail} im Hochdruckspeicher 28 den Schwellenwert P_SCHW überschritten hat. Ist diese Bedingung erfüllt, die Abfrage also positiv, dann wird im Verfahrensschritt S8 die Einspritzmenge MFF aus einem Kennfeld KF4 des Speichers 35 ausgelesen. In diesem Kennfeld KF4 sind in Abhängigkeit von der Kühlmitteltemperatur TKW, der Drehzahl N und des Inhalts des Zyklenzählers Werte für die Einspritzmenge MFF in mg/Hub abgelegt. Sobald der Wert für die Druckschwelle P_SCHW einmal überschritten wurde, bleibt der Hochdruckstart freigegeben, auch wenn der Druck im Hochdruckspeicher 28 anschließend durch den Einspritzvorgang ausgelöst wieder unter den Schwellenwert fällt.

Außerdem wird aus einem Kennfeld KF5 des Speichers 35 der Einspritzendewinkel EOI als Funktion der Kühlmitteltemperatur TKW ausgelesen. Mit diesen Parametern wird die Einspritzung ausgeführt.

Anschließend wird im Verfahrensschritt S9 abgefragt, ob das Ende des Startvorganges schon erreicht ist. Der Startvorgang ist abgeschlossen, wenn die vom Drehzahlsensor erfaßte Drehzahl N einen vorgegebenen Grenzwert überschritten hat. Bei negativem Ergebnis der Abfrage wird der Verfahrensschritt S8 wiederholt ausgeführt, andernfalls erfolgt die Berechnung der Parameter für den Einspritzvorgang nach herkömmlicher Weise für den Betrieb der Brennkraftmaschine außerhalb des Startvorganges (Verfahrensschritt S10).

## Patentansprüche

1. Verfahren zum Betreiben einer direkteinspritzenden Brennkraftmaschine während des Starts, wobei die Brennkraftmaschine wahlweise mit homogenem oder geschichtetem Betrieb gestartet werden kann und hierfür vorbestimmte Motorsteuerungsparameter für den homogenen und den geschichteten Betrieb berechnet werden, wobei
- abhängig von einer die Temperatur der Brennkraftmaschine charakterisierenden Größe (TKW) zwischen dem Betrieb mit homogenem Gemisch und geschichtetem Gemisch ausgewählt wird,
- bei Betrieb mit geschichtetem Gemisch die Einspritzung durch die Parameter Einspritzmenge (MFF) und Einspritzendewinkel (EOI) vorgegeben ist, **dadurch gekennzeichnet, dass** der Betrieb mit geschichtetem Gemisch nur freigegeben wird, wenn der Kraftstoffdruck (PRail) einen vorgegebenen Schwellenwert (P_SCHW) innerhalb einer bestimmten Anzahl von Zyklen der Brennkraftmaschine erreicht hat, und andernfalls der Betrieb mit homogenem Gemisch ausgewählt wird.

2. Verfahren nach Anspruch 1, **dadurch gekennzeichnet, daß** der Betrieb mit geschichtetem Gemisch ausgewählt wird, wenn die Kühlmitteltemperatur (TKW) einen vorgegebenen Schwellenwert (TKW_SCHW) überschritten hat, andernfalls der Betrieb mit homogenem Gemisch ausgewählt wird.

3. Verfahren nach Anspruch 1, **dadurch gekennzeichnet, daß** die Einspritzmenge (MFF) bei Start mit geschichtetem Gemisch als Funktion der Kühlmitteltemperatur (TKW), der Drehzahl (N) der Brennkraftmaschine und dem Wert des Inhaltes eines Zyklenzählers bestimmt ist, der die Anzahl der Zyklen der Brennkraftmaschine seit dem Start der Brennkraftmaschine zählt.

4. Verfahren nach Anspruch 1, **dadurch gekennzeichnet, daß** der Einspritzendewinkel (EOI) abhängig von der Kühlmitteltemperatur (TKW) festgelegt ist.

5. Verfahren nach Anspruch 2, **dadurch gekennzeichnet, daß** bei Betrieb mit homogenem Gemisch die Einspritzung durch die Parameter Einspritzmenge (MFF) und Einspritzbeginnwinkel (SOI) vorgegeben ist.

6. Verfahren nach Anspruch 2, **dadurch gekennzeichnet, daß** die Einspritzmenge (MFF) bei Start mit homogenem Gemisch als Funktion der Kühlmitteltemperatur (TKW) und der Drehzahl (N) der Brennkraftmaschine bestimmt ist.

7. Verfahren nach Anspruch 2, **dadurch gekennzeichnet, daß** bei Betrieb mit homogenem Gemisch der Einspritzbeginnwinkel (SOI) abhängig von der Drehzahl (N) und der Einspritzzeit (TI) festgelegt ist.

8. Verfahren nach Anspruch 1, **dadurch gekennzeichnet, daß** der Schwellenwert (P_SCHW) für den Kraftstoffdruck (P_Rail) abhängig von der Kühlmitteltemperatur (TKW) der Brennkraftmaschine in einem Kennfeld (KF3) eines Speichers einer zur Steuerung der Brennkraftmaschine dienenden Steuerungseinrichtung (21) abgelegt ist.

9. Verfahren nach Anspruch 2, **dadurch gekennzeichnet, daß** die Werte für die Einspritzmengen (MFF) für den geschichteten und den homogenen Betrieb der Brennkraftmaschine, den Einspritzbeginnwinkel (SOI) und den Einspritzendewinkel (EOI) getrennt in unterschiedlichen Kennfeldern (KF1; KF4, KF2; KF5) eines Speichers (35) einer zur Steuerung der Brennkraftmaschine dienenden Steuerungseinrichtung (21) abgelegt sind.

10. Verfahren nach Anspruch 1, **dadurch gekennzeichnet, daß** beim Betrieb mit geschichtetem Gemisch die Einspritzzeit auf einen frühest möglichen Einspritzbeginnwinkel begrenzt wird.

11. Verfahren nach Anspruch 2, **dadurch gekennzeichnet, daß** beim Betrieb mit homogenem Gemisch die Einspritzzeit hinsichtlich des Einspritzendewinkel begrenzt wird.

## Claims

1. Method for the operation of a direct-injected internal combustion engine during the start, in which the internal combustion engine can optionally be started with a homogenous operation or a stratified operation and predetermined engine control parameters are calculated for this purpose for homogenous operation and stratified operation, in which
- depending on a variable (TKW) characterizing the temperature of the internal combustion engine, a selection is made between operation with a homogenous mixture and a stratified mixture,
- during operation with a stratified mixture, the injection is predefined by the parameters injected quantity of fuel (MFF) and the end angle of the injection (EOI), **characterized in that** operation with a stratified mixture is only allowed once the fuel pressure (PRail) has reached a predefined threshold value (P_SCHW) within a specific number of cycles of the internal combustion engine and, failing that, operation with a homogenous mixture is selected.

2. Method according to claim 1, **characterized in that** operation with a stratified mixture is selected if the coolant temperature (TKW) has exceeded a predefined threshold value (TKW_SCHW) otherwise operation with a homogenous mixture is selected.

3. Method according to claim 1, **characterized in that** the quantity of fuel to be injected (MFF) at the start with a stratified mixture is determined as a function of the coolant temperature (TKW), the rotational speed (N) of the internal combustion engine and the value of the contents of a cycle counter, which counts the number of cycles of the internal combustion engine since the start of the internal combustion engine.

4. Method according to claim 1, **characterized in that** the end angle of the injection (EOI) is determined as a function of the coolant temperature (TKW).

5. Method according to claim 2, **characterized in that**, for operation with a homogenous mixture, the injection is predefined by the parameters quantity of fuel to be injected (MFF) and the beginning angle of the injection (SOI).

6. Method according to claim 2, **characterized in that** the quantity of fuel to be injected (MFF) when starting with a homogenous mixture is determined as a function of the coolant temperature (TKW) and the rotational speed (N) of the internal combustion engine.

7. Method according to claim 2, **characterized in that** for operation with a homogenous mixture, the beginning angle of the injection (SOI) is determined as a function of the rotational speed (N) and the injection time (TI).

8. Method according to claim 1, **characterized in that** the threshold value (P_SCHW) for the fuel pressure (P_Rail) is stored as a function of the coolant temperature (TKW) of the internal combustion engine in an engine map (KF3) of a storage unit of a control device (21) used for the control of the internal combustion engine.

9. Method according to claim 2, **characterized in that** the values for the quantities of fuel to be injected (MFF) for stratified operation and homogenous operation of the internal combustion engine, the beginning angle of the injection (SOI) and the end angle of the injection (EOI) are stored separately in different engine maps (KF1; KF4, KF2; KF5) of a storage unit (35) of a control device (21) used for the control of the internal combustion engine.

10. Method according to claim 1, **characterized in that** for operation with a stratified mixture, the injection time is limited to a beginning angle of the injection which takes place as early as possible.

11. Method according to claim 2, **characterized in that** for operation with a homogenous mixture, the injection time is limited with regard to the end angle of the injection.

## Revendications

1. Procédé pour le fonctionnement d'un moteur à combustion interne à injection directe au démarrage, le moteur à combustion interne pouvant être démarré de manière arbitraire avec un fonctionnement à charge homogène ou à charge stratifiée et des paramètres de pilotage du moteur étant calculés, à cet effet, pour le fonctionnement à charge homogène et celui à charge stratifiée, sachant que
- en fonction d'une valeur (TKW) caractérisant la température du moteur à combustion interne, il est choisi entre le fonctionnement avec un mélange homogène ou un mélange stratifié ;
- en cas de fonctionnement avec un mélange stratifié, l'injection est prédéfinie par les paramètres relatifs à la quantité à injecter (MFF) et à l'angle de fin d'injection (EOI), **caractérisé en ce que** le fonctionnement avec un mélange stratifié est seulement possible lorsque la pression du carburant (P_Rail) a atteint une valeur seuil prédéfinie (P_SCHW) en un nombre déterminé de cycles du moteur à combustion interne et, dans le cas contraire, est choisi le fonctionnement avec un mélange homogène.

2. Procédé selon la revendication 1, **caractérisé en ce que** le fonctionnement avec un mélange stratifié est choisi lorsque la température du liquide de refroidissement (TKW) a dépassé une valeur seuil prédéfinie (TKW_SCHW), dans le cas contraire, est choisi le fonctionnement avec un mélange homogène.

3. Procédé selon la revendication 1, **caractérisé en ce qu'**en cas de démarrage avec un mélange à charge stratifiée, la quantité à injecter (MFF) est déterminée en tant que fonction de la température du liquide de refroidissement (TKW), du régime moteur (N) et de la valeur du contenu d'un compteur de cycles qui compte le nombre de cycles du moteur à combustion interne à partir du démarrage du moteur à combustion interne.

4. Procédé selon la revendication 1, **caractérisé en ce que** l'angle de fin d'injection (EOI) est défini en fonction de la température du liquide de refroidissement (TKW).

5. Procédé selon la revendication 2, **caractérisé en ce qu'**en cas de fonctionnement avec un mélange homogène, l'injection est prédéfinie par les paramètres relatifs à la quantité à injecter (MFF) et à l'angle de début d'injection (SOI).

6. Procédé selon la revendication 2, **caractérisé en ce qu'**en cas de démarrage avec un mélange homogène, la quantité à injecter (MFF) est déterminée en tant que fonction de la température (TKW) et du régime moteur (N) du moteur à combustion interne.

7. Procédé selon la revendication 2, **caractérisé en ce qu'**en cas de démarrage avec un mélange homogène, l'angle de début d'injection (SOI) est défini en fonction du régime moteur (N) et du temps d'injection (TI).

8. Procédé selon la revendication 1, **caractérisé en ce que** la valeur seuil (P_SCHW) pour la pression de carburant (P_Rail) est enregistrée, en fonction de la température du liquide de refroidissement (TKW) du moteur à combustion interne, sur un diagramme caractéristique (KF3) d'une mémoire d'un dispositif de commande (21) destiné au pilotage du moteur à combustion interne.

9. Procédé selon la revendication 2, **caractérisé en ce que** les valeurs de la quantité à injecter (MFF) pour le fonctionnement à charge stratifiée et celui à charge homogène du moteur à combustion interne, de l'angle de début d'injection (SOI) et de l'angle de fin d'injection (EOI) sont enregistrées séparément sur différents diagrammes caractéristiques (KF1 ; KF4 ; KF2 ; KF5) d'une mémoire (35) d'un dispositif de commande (21) destiné au pilotage du moteur à combustion interne.

10. Procédé selon la revendication 1, **caractérisé en ce qu'**en cas de fonctionnement avec un mélange stratifié, le temps d'injection est limité à un angle de début d'injection le plus précoce possible.

11. Procédé selon la revendication 2, **caractérisé en ce qu'**en cas de fonctionnement avec un mélange homogène, le temps d'injection est limité par rapport à l'angle de fin d'injection.
